# DEMANDE DE BREVET EUROPEEN

(11) **EP 2 997 821 A1**
(43) Date de publication de la demande: **23.03.2016**
(21) Numéro de dépôt: 15186121.8
(22) Date de dépôt: 21.09.2015
(51) Int. Cl.: A01G 25/16

(54) **INSTALLATION D'ARROSAGE ET PROCÉDÉ DE COMMANDE D'ARROSAGE**

(30) Priorité: 22.09.2014 FR 1458894
(71) Demandeur: Somfy SAS, 74300 Cluses (FR)
(72) Inventeur: CAVAREC, Pierre Emmanuel, 74130 Mont Saxonnex (FR); CLERGET, Sergyl, 74290 Bluffy (FR); ROUSSEAU, Fabien, 74440 Mieussy (FR)
(74) Mandataire: Verriest, Philippe

(57) **Abrégé**

L'invention concerne une installation d'arrosage (1) comprenant une vanne commandée (2) agencée pour contrôler la délivrance un liquide d'arrosage tel que de l'eau ou une solution nutritive par au moins un conduit d'arrosage (11) ; au moins un capteur de mesure (3, 3a, 3b, 3c) agencé pour fournir des données de mesure d'au moins une grandeur physique représentative de l'environnement (DR) ; une unité électronique de commande (4) agencée pour déterminer une commande d'arrosage (Cmd) en fonction des données de mesure d'au moins une grandeur physique représentative de l'environnement (DR) fournies par l'au moins un capteur de mesure (3), la vanne commandée (2) étant agencée pour appliquer la commande d'arrosage (Cmd) déterminée par l'unité électronique de commande (4) de façon à contrôler la délivrance de liquide d'arrosage. L'invention concerne également un procédé de commande d'arrosage.

## Description

La présente invention concerne une installation d'arrosage et un procédé de commande et/ou de contrôle d'arrosage.

Il est connu de disposer d'une installation d'arrosage comprenant au moins un conduit d'arrosage destiné à délivrer un liquide d'arrosage tel que de l'eau ou une solution nutritive, notamment afin d'arroser un ou plusieurs végétaux. Une telle installation d'arrosage peut être associée à un programmateur de façon à procéder à l'arrosage de façon automatique et sélective sur des plages de temps prédéfinies.

Ces dispositions donnent satisfaction en ce qu'elles permettent d'adapter la délivrance d'une quantité d'eau en fonction d'un programme prédéfini. Toutefois, il apparaît qu'un tel type d'installation ne permet pas de prendre en compte la variabilité des conditions de l'environnement, notamment dans le cas de l'arrosage des végétaux.

La présente invention vise à résoudre tout ou partie des inconvénients mentionnés ci-dessus.

A cet effet, la présente invention concerne une installation d'arrosage comprenant :
- Une vanne commandée agencée pour contrôler la délivrance d'un liquide d'arrosage tel que de l'eau ou une solution nutritive par au moins un conduit d'arrosage ;
- Au moins un capteur de mesure agencé pour fournir des données de mesure d'au moins une grandeur physique représentative de l'environnement ;
- Une unité électronique de commande agencée pour déterminer une commande d'arrosage en fonction des données de mesure d'au moins une grandeur physique représentative de l'environnement fournies par l'au moins un capteur de mesure,
la vanne commandée étant agencée pour appliquer la commande d'arrosage déterminée par l'unité électronique de commande de façon à contrôler la délivrance du liquide d'arrosage.

Selon un aspect de l'invention, la vanne commandée est agencée pour délivrer un débit d'arrosage proportionnel à une valeur de la commande d'arrosage fournie par l'unité électronique de commande.

Ces dispositions permettent de commander la vanne commandée en fonction d'un débit souhaité, et non en tout-ou-rien. Il est ainsi possible de réaliser des arrosages "goutte à goutte" ou en "fort débit" en maitrisant le débit et le volume total délivré.

Grâce aux dispositions selon l'invention, l'unité électronique de commande est agencée pour déterminer, sur la base des données de mesure communiquées par l'au moins un capteur, une commande d'arrosage adaptée aux conditions environnementales.

Par commande d'arrosage, on entend notamment une définition d'une valeur ou d'une évolution temporelle d'une valeur souhaitée pour une grandeur de commande correspondant par exemple à un débit souhaité dans l'au moins un conduit d'arrosage ou à une section d'ouverture/fermeture de l'au moins un conduit d'arrosage définie par la vanne. Il est également possible de définir une commande d'arrosage comme un ordre ou un ensemble d'ordres d'ouverture/fermeture communiqués à la vanne commandée, et notamment à un actionneur, pour obtenir une valeur souhaitée de ladite grandeur de commande.

Selon un aspect de l'invention, l'au moins un capteur comprend un capteur d'humidité du sol. En particulier le capteur peut déterminer l'humidité en mesurant la résistance aux bornes d'une « fourche » destinée à être enterrée dans le sol.

Selon un aspect de l'invention, l'au moins un capteur comprend un capteur de température. La température mesurée est notamment la température de l'air ambiant.

Selon un aspect de l'invention, l'au moins un capteur comprend un capteur d'ensoleillement. Ce capteur peut également servir à détecter les alternances jour/nuit.

Ces dispositions permettent par exemple à l'unité électronique de déterminer qu'un arrosage n'est pas souhaitable à midi en plein soleil, alors qu'un arrosage peut être déclenché lors de la détection de la tombée de la nuit ou plus tard dans la nuit.

Selon un aspect de l'invention, dans un cas où la commande d'arrosage est définie comme un ordre ou un ensemble d'ordres d'ouverture/fermeture, un message de commande d'arrosage comprend au moins un ordre d'action de début et un ordre de fin de l'arrosage. Grâce à ces dispositions, il est possible d'éviter un risque de non réception d'un ordre de fermeture de la vanne.

Selon un aspect de l'invention, la détermination de la commande d'arrosage comprend une utilisation d'au moins un profil de commande comprenant plusieurs phases distinctes.

Un profil de commande peut notamment correspondre à un modèle de définition d'une évolution temporelle d'une valeur souhaitée pour une grandeur de commande, comme par exemple un débit, les phases distinctes pouvant ainsi correspondre à des niveaux distincts de débit.

En particulier, le profil de commande prédéfini peut correspondre à un profil adapté à un type de végétal à arroser, ou encore à un profil d'évolution temporel de la commande d'arrosage. Selon un aspect de l'invention, l'installation est agencée pour adapter des intervalles de mesure du capteur. Selon un aspect de l'invention, l'adaptation des intervalles de mesure peut être réalisée en fonction d'intervalles de communication avec l'unité électronique de commande ou en fonction de la variation ou de la pertinence des valeurs de mesure. Par exemple, l'intervalle de mesure peut être modifié si des variations d'une amplitude déterminée sont détectées. Selon un autre exemple, l'intervalle de mesure peut être réduit sur une période de communication avec l'unité électronique de commande.

Ces dispositions permettent de réduire la consommation énergétique de l'installation.

Selon un aspect de l'invention, l'au moins un profil de commande est paramétrable, notamment en fonction des données collectées,

Selon un aspect de l'invention, le capteur et/ou l'électrovanne comprennent un module photovoltaïque destiné à produire l'énergie nécessaire à son fonctionnement et/ou la charge d'une batterie comprise dans le capteur ou l'électrovanne. De la même façon l'unité électronique de commande peut comprendre un module photovoltaïque.

Ces dispositions permettent d'assurer l'alimentation en énergie du capteur et/ou de l'électrovanne et/ou de l'unité électronique de commande.

Selon un aspect de l'invention, le capteur est agencé pour différencier des conditions d'environnement correspondant à un niveau de luminosité d'un temps couvert d'une baisse de luminosité temporaire correspondant par exemple au passage d'un nuage.

Selon un aspect de l'invention, la vanne commandée est une vanne à au moins trois voies.

Selon un aspect de l'invention, la vanne commandée comprend une première voie destinée à être raccordée à une première source d'alimentation en liquide d'arrosage, une seconde voie destinée à être raccordée à une seconde source d'alimentation en liquide d'arrosage et une troisième voie étant raccordée à l'au moins un conduit d'arrosage la vanne commandée étant agencée pour raccorder sélectivement la troisième voie raccordée à l'au moins un conduit d'arrosage à la première voie ou à la seconde voie.

Ces dispositions permettent en particulier de procéder à un arrosage en en utilisant une première source d'alimentation en liquide d'arrosage constituée par une réserve d'eau de pluie, et une deuxième source d'alimentation en liquide d'arrosage constituée par un raccordement à un réseau de distribution d'eau potable. Selon un aspect de l'invention, il peut être notamment défini que l'alimentation par la réserve d'eau pluviale est utilisée en priorité.

Selon un autre aspect de l'invention, une première voie de la vanne commandée est destinée à être raccordée à une source d'alimentation en liquide d'arrosage, une seconde voie est destinée à être raccordée à premier conduit d'arrosage, et une troisième voie est destinée à être raccordée à un second conduit d'arrosage, la vanne commandée étant agencée pour raccorder sélectivement la source d'alimentation au premier ou au second conduit d'arrosage.

Ces dispositions permettent d'utiliser la vanne commandée pour servir deux zones d'arrosage à partir d'une alimentation de liquide d'arrosage.

Selon un aspect de l'invention, l'installation d'arrosage comprend au moins un capteur de débit agencé pour fournir des données de mesure d'un débit de liquide d'arrosage dans l'au moins un conduit d'arrosage.

Ces dispositions permettent à l'unité électronique de commander l'arrosage en définissant un débit d'arrosage à délivrer aux végétaux. Par ailleurs, le volume délivré peut également être déterminé avec précision. Ces dispositions permettent de réaliser un arrosage plus précis qu'un arrosage défini par un temps d'arrosage. Le capteur de débit de liquide d'arrosage peut être intégré dans la vanne commandée ou inséré dans une autre partie de l'installation.

Selon un aspect de l'invention, l'unité électronique est agencée pour déclencher une commutation de la vanne commandée en fonction d'une valeur représentative de débit faible communiquée par le capteur de débit de liquide d'arrosage vers une autre source d'alimentation, dans le cas où la vanne commandée est une vanne à au moins trois voies.

A titre d'exemple, il est possible de commuter préférentiellement la vanne commandée sur une réserve d'eau pluviale, puis de commuter la vanne sur le réseau d'alimentation en eau potable lorsqu'un débit trop faible est détecté par le capteur de débit.

Selon un aspect de l'invention, l'unité électronique de commande est agencée pour réaliser une vérification périodique du remplissage de la réserve d'eau. En cas de détection de débit faible (donc niveau faible de la réserve), il peut être choisi de simplement alerter l'utilisateur par un message d'alerte, par exemple via un terminal mobile tel qu'un téléphone intelligent.

Selon un aspect de l'invention, le capteur de débit est disposé en aval de l'électrovanne. Selon un autre aspect de l'invention, un capteur de débit est disposé en amont de l'électrovanne.

Selon un aspect de l'invention, l'unité électronique de commande est agencée pour comparer les données de mesure d'un débit de liquide d'arrosage fournies par l'au moins un capteur de débit à la commande d'arrosage déterminée en fonction des données de mesure d'au moins une grandeur physique représentative de l'environnement.

Grâce à ces dispositions, l'unité électronique de commande peut réaliser un asservissement en fonction d'un débit souhaité.

Selon un aspect de l'invention, l'unité électronique de commande est agencée pour réaliser un diagnostic automatique de la vanne commandée. Ainsi, l'unité électronique peut déterminer la présence d'une fuite si une valeur significative de débit est détectée alors que la commande de la vanne commandée correspond à un état de fermeture.

Selon un aspect de l'invention, l'installation d'arrosage, comprend une turbine destinée à l'alimentation électrique de la vanne commandée.

Ces dispositions permettent d'alimenter en énergie la vanne commandée. Il est notamment possible d'utiliser une turbine ou une micro-turbine pour alimenter une électrovanne ou recharger une batterie de l'électrovanne.

Selon un aspect de l'invention, la turbine peut être utilisée à la fois comme capteur de débit et comme alimentation électrique.

Selon un aspect de l'invention, l'unité électronique de commande est disposée de façon distante par rapport à la vanne commandée et/ou l'au moins un capteur de mesure, l'unité électronique de commande ainsi que la vanne commandée et/ou l'au moins un capteur de mesure comprenant une interface de communication à distance, notamment une interface de communication sans fil.

Selon un mode de réalisation de l'invention, l'unité électronique est disposée de façon solidaire avec l'au moins un capteur, par exemple dans un boîtier commun.

Selon un autre mode de réalisation de l'invention, l'unité électronique est disposée de façon solidaire avec la vanne commandée, par exemple dans un boîtier commun.

Selon encore un autre mode de réalisation de l'invention, l'unité électronique est distante à la fois de l'au moins un capteur et de la vanne commandée.

Selon un aspect de l'invention, l'interface de communication de l'unité électronique, de l'au moins un premier capteur de mesure et/ou de l'au moins un second capteur de mesure sont des interfaces de communication de type radiofréquence.

Selon un aspect de l'invention, l'installation comprend une première unité électronique de commande et une seconde unité électronique de commande, la première unité électronique de commande et la seconde unité électronique de commande étant agencées pour communiquer de façon à permettre que l'une des deux unités électronique de commande soit identifiée comme une unité maître et définisse la commande d'arrosage.

Ces dispositions permettent notamment de disposer d'une unité électronique de commande dans le capteur ou l'électrovanne pour réaliser une commande lorsque l'installation ne comprend pas une seconde unité électronique de commande constituée par exemple par une entité de commande d'une installation domotique, ou que cette seconde unité n'est pas en fonctionnement ou non accessible par des moyens de communication.

Selon un aspect de l'invention, l'unité électronique de commande est agencée pour collecter des données météorologiques et pour déterminer la commande d'arrosage également en fonction desdites données météorologiques.

Selon ces dispositions, l'unité électronique de commande peut prendre en compte dans la détermination de la commande d'arrosage les données météorologiques qui ont une influence sur les besoins en eau des végétaux à arroser.

Selon un mode de réalisation, l'unité électronique est agencée pour collecter des données de programmation renseignées ou sélectionnées par un utilisateur et pour déterminer la commande d'arrosage également en fonction des données de programmation.

Selon un aspect de l'invention, l'installation d'arrosage comprend un système d'interface utilisateur agencé pour collecter des données de programmation à renseigner et/ou à sélectionner par un utilisateur. Le système d'interface peut être notamment comprendre un écran et des boutons de commandes, ou un écran tactile, ou une application hébergée sur un terminal mobile, ou un page web accessible par un réseau privé ou public. Le système d'interface est agencé pour communiquer avec l'unité électronique de commande.

Selon un aspect de l'invention, le système d'interface utilisateur comprend un bouton disposé sur le capteur et/ou sur l'électrovanne.

Ce bouton est notamment agencé pour réaliser une commande directe de l'électrovanne ou encore pour initier un appairage entre le capteur et l'électrovanne ou entre le capteur et/ou l'électrovanne et l'unité de commande électronique.

Selon un autre aspect de l'invention, une télécommande spécifique peut être prévue pour commander directement l'électrovanne et/ou le capteur.

Sur la base des données de mesure des différents capteurs, des données météorologiques, et des programmations de l'utilisateur, l'unité électronique peut optimiser un scenario d'arrosage. Par exemple, l'unité électronique peut annuler un cycle d'arrosage si une journée de pluie est prévue le lendemain par les données météorologiques.

Selon un aspect de l'invention, l'unité électronique est agencée pour accéder à un référentiel de données relatives à des types de végétaux à arroser comprenant des données sur le type d'arrosage à appliquer auxdits végétaux, de façon à proposer ou effectuer la détermination d'un choix d'arrosage.

Selon un aspect de l'invention, l'installation comprend une mémoire de stockage d'un référentiel de données relatives à des types de végétaux à arroser.

Selon un mode de réalisation, la vanne commandée est une vanne commandée électriquement ou électrovanne. Selon une première possibilité, ladite électrovanne peut être alimentée par pile, par batterie ou encore par un module photovoltaïque.

Selon une seconde possibilité la vanne commandée peut être alimentée par une turbine, notamment une micro-turbine agencée pour fournir l'énergie nécessaire au fonctionnement de la vanne commandée, la turbine étant entrainée par le débit de liquide d'arrosage à travers la vanne commandée.

Selon un aspect de l'invention, la vanne commandée est agencée pour se fermer par défaut en l'absence d'alimentation ou en cas de défaillance ou d'absence de commande communiquée par l'unité électronique.

Selon plusieurs possibilités, la vanne commandée utilisée peut être notamment de type électrovanne à dépression pilotée, vanne comprenant un ressort de rappel avec un point mort haut en position ouverte, vanne utilisant le débit pour réduire l'énergie nécessaire à la fermeture. Le choix du type de vanne commandée est guidé par la consommation d'énergie souhaitée en position ouverte et l'énergie nécessaire pour la fermeture.

La présente invention concerne également un procédé de commande d'une installation d'arrosage comprenant :
- Une étape de collecte de données de mesure d'au moins une grandeur physique représentative de l'environnement;
- Une étape de détermination d'une commande d'arrosage en fonction des données de mesure d'au moins une grandeur physique représentative de l'environnement ;
- Une étape d'arrosage au cours de laquelle la délivrance d'un liquide d'arrosage, tel que de l'eau ou une solution nutritive, est réalisée en correspondance avec la commande d'arrosage.

Selon un aspect de l'invention, l'étape de détermination d'une commande d'arrosage comprend une utilisation d'au moins un profil de commande d'arrosage, ledit profil de commande d'arrosage comprenant au moins une première phase d'arrosage à une première valeur de débit pendant une première période d'arrosage, puis une seconde phase d'arrosage à une seconde valeur de débit pendant une seconde période d'arrosage, la seconde valeur de débit étant supérieure à la première valeur de débit.

Les phases distinctes correspondent donc à des arrosages selon des débits différents ou des variations de débits différentes.

Ces dispositions permettent de préparer/humidifier le sol pendant la première phase avec un faible débit afin d'éviter le ruissellement lors de la seconde phase, puis de procéder à un arrosage avec un second débit plus important lors de a seconde phase.

A titre d'exemple, la fin de la seconde phase peut être déterminée par la constatation d'un niveau d'humidité satisfaisant par une sonde d'humidité.

Selon un aspect de l'invention, lors de l'étape d'arrosage, le liquide d'arrosage est délivré selon un débit d'arrosage proportionnel à une valeur de ladite commande d'arrosage.

Cette disposition permet d'adapter l'arrosage à un débit souhaité, et non de réaliser un arrosage de type tout-ou-rien. Il est ainsi possible de réaliser des arrosages "goutte à goutte" ou en "fort débit" en maitrisant le débit et le volume total délivré.

Selon un aspect de l'invention, l'au moins un profil de commande est paramétrable, notamment en fonction des données collectées.

En particulier l'au moins un profil ou scenario de commande prédéfini peut correspondre à un profil adapté à un type de végétal à arroser, ou encore à un profil d'évolution temporel de la commande d'arrosage.Selon un aspect de l'invention, le profil de commande peut être défini en déterminant le débit de liquide d'arrosage en fonction de la variation d'humidité constatée au niveau de la sonde sur une période de temps. La période de temps peut être défini préalablement à une période d'arrosage, et/ou lors d'une période d'arrosage, ou encore consécutivement à une période d'arrosage.

Selon un aspect de l'invention, le profil de commande définit un déclenchement de l'arrosage de façon préférentielle dans les premières heures, notamment les trois premières heures ou les deux premières heures, après le lever du soleil et/ou les dernières heures notamment les trois dernières heures ou les deux dernières heures précédant le coucher du soleil.

Ces dispositions permettent d'éviter l'arrosage de nuit car les plantes absorbent moins d'eau et évite l'arrosage lorsque les plantes sont exposées de façon importante au soleil.

Selon un aspect de l'invention, le profil prédéfini peut être paramétrable.

Selon un aspect de l'invention, le procédé commande comprend en outre une étape de collecte de données de mesure d'un débit de liquide d'arrosage obtenues par une mesure dans au moins un conduit d'arrosage, l'étape de détermination d'une commande d'arrosage comprenant une détermination d'une commande d'arrosage réalisée en outre en fonction des données de mesure d'un débit.

Selon un aspect de l'invention, le procédé comprend une étape de comparaison des données de mesure d'un débit de liquide d'arrosage obtenues par une mesure à la commande d'arrosage.

Selon un aspect de l'invention, le procédé de commande comprend en outre une étape de sélection d'une source d'alimentation en liquide d'arrosage parmi une pluralité de sources d'alimentations en liquide d'arrosage, la quantité de liquide d'arrosage délivrée lors de l'étape d'arrosage étant prélevé de la source d'alimentation sélectionnée.

Selon un aspect de l'invention, le procédé de commande comprend en outre une étape de collecte de données météorologiques, l'étape de détermination d'une commande d'arrosage comprenant une détermination d'une commande d'arrosage réalisée en outre en fonction des données météorologiques.

Selon un aspect de l'invention, le procédé de commande comprend en outre une étape de collecte de données de programmation renseignées ou sélectionnées par un utilisateur, l'étape de détermination d'une commande d'arrosage comprenant une détermination d'une commande d'arrosage réalisée en outre en fonction des données de programmation.

Les données de programmations peuvent notamment correspondre à la sélection d'un programme de fonctionnement de l'installation, ou encore à des données d'utilisation ou de commande directe de l'installation par un utilisateur. La sélection d'un programme de fonctionnement peut correspondre à la sélection d'un profil ou scenario de commande pré-établi. La commande peut être réalisée sur un critère de temps et/ou de débit et/ou de volume. Le profil de commande peut correspondre à la définition de contraintes de débit ou de volume d'arrosage.

Selon un aspect de l'invention, le procédé de commande peut comprendre une étape de vérification d'au moins un critère de sécurité sur le volume ou le temps d'arrosage en prévoyant un seuil d'arrêt au-delà d'une durée d'arrosage ou d'un volume d'arrosage maximal

Selon un aspect de l'invention, le procédé de commande comprend une étape d'apprentissage au cours de laquelle une corrélation des données de programmation et des données de mesure d'au moins une grandeur physique représentative de l'environnement est réalisée de façon à déterminer des données d'apprentissage,
l'étape de détermination d'une commande d'arrosage comprenant une détermination d'une commande d'arrosage réalisée en outre en fonction des données d'apprentissage.

Ces dispositions permettent de procéder à une étape d'apprentissage pendant une période d'utilisation, notamment une durée d'utilisation initiale, par exemple de quelques jours, en corrélant les données de programmation qui reflètent les habitudes de l'utilisateur client et les données de mesure d'au moins une grandeur physique représentative de l'environnement, comme notamment l'humidité du sol, la température ou l'ensoleillement.

De toute façon l'invention sera bien comprise à l'aide de la description qui suit en référence aux dessins schématiques annexés représentant, à titre d'exemple non limitatif, une forme d'exécution de cette installation et de ce procédé s'arrosage.
Figure 1 est une vue schématique d'une installation d'arrosage.
Figure 2 est un ordinogramme des étapes d'un procédé d'arrosage.
Figure 3 est une vue de face d'une électrovanne selon un premier mode de réalisation à deux voies.
Figure 4 est une vue en perspective de l'électrovanne de figure 3.
Figure 5 est une vue de face d'une électrovanne selon un second mode de réalisation à trois voies.
Figure 6 est une vue en perspective de l'électrovanne de figure 5.
Figure 7 est une vue de face d'un capteur.
Figure 8 est une vue en perspective du capteur de figure 7.
Figure 9 est un schéma représentatif d'un profil de commande.

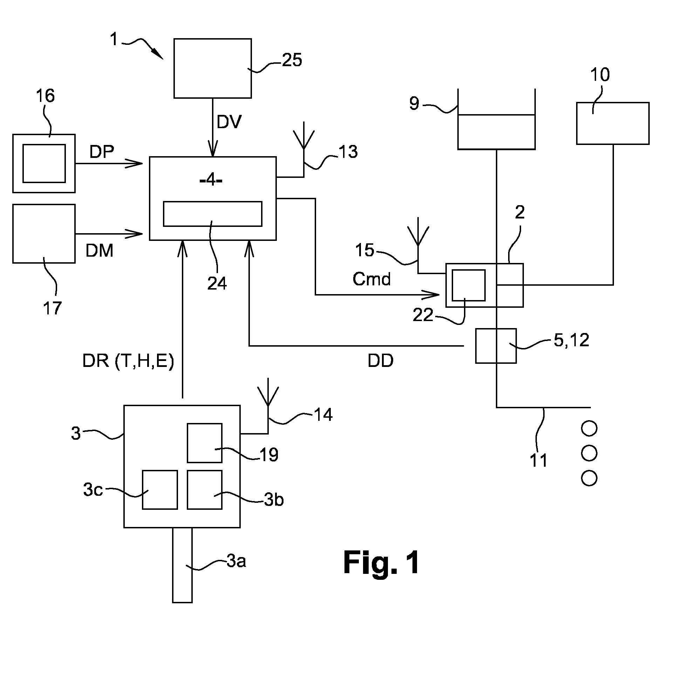

Comme illustré sur la figure 1, une installation d'arrosage 1 comprend une vanne commandée 2 agencée pour contrôler la délivrance de liquide d'arrosage, tel que de l'eau ou une solution nutritive, par au moins un conduit d'arrosage 11, un capteur de mesure 3 agencé pour fournir des données de mesure d'au moins une grandeur physique représentative de l'environnement DR et une unité électronique de commande 4.

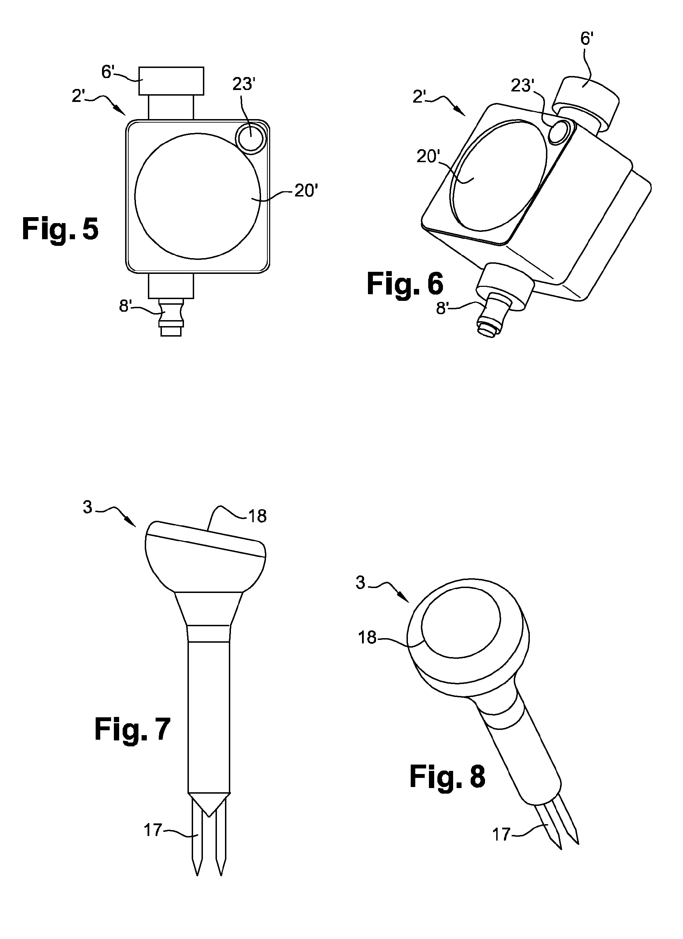

Le capteur 3 est représenté sur la figure 1 et sur les figures 7 et 8. Ce capteur comprend un capteur d'humidité du sol3a. En particulier, le capteur d'humidité 3a peut déterminer l'humidité en mesurant la résistance aux bornes d'une fourche 17 comprenant deux branches destinées à être enterrées dans le sol.

Le capteur 3 peut également comprendre un capteur de température 3b, notamment de la température de l'air ambiant et/ou un capteur d'ensoleillement 3c. En particulier, le capteur d'ensoleillement 3c est agencé pour différencier une situation de jour d'une situation de nuit ou des conditions d'environnement correspondant à un niveau de luminosité d'un temps couvert d'une baisse de luminosité temporaire correspondant par exemple au passage d'un nuage.

Le capteur 3 comprend par ailleurs un module photovoltaïque 18 destiné à produire l'énergie nécessaire à son fonctionnement et/ou la charge d'une batterie comprise dans le capteur ou l'électrovanne. Alternativement, il peut être alimenté par des piles.

Le capteur 3 comprend par ailleurs une unité de traitement électronique 19 et une interface de communication à distance 14 destinée à la communication avec l'entité centrale 4.

Selon le mode de réalisation présenté sur les figures 7 et 8, le capteur 3 présente une forme allongée entre une première extrémité profilée sur laquelle est positionnée la fourche 17, destinée à être enfoncée dans le sol, et une seconde extrémité élargie comprenant le module photovoltaïque destiné à être positionné à l'opposé du sol. Les capteurs de température 3b et d'ensoleillement 3c sont disposés au niveau de la seconde extrémité élargie.

L'unité de traitement électronique 19 du capteur peut être agencée pour adapter des intervalles de mesure du capteur. En particulier, l'adaptation des intervalles de mesure peuvent être réalisée en fonction d'intervalle de communication avec l'unité électronique de commande 4 ou en fonction de la variation ou de la pertinence des valeurs de mesure. Par exemple, l'intervalle de mesure peut être modifié si des variations d'une amplitude déterminée sont détectées sur une période de communication avec l'unité électronique de commande.

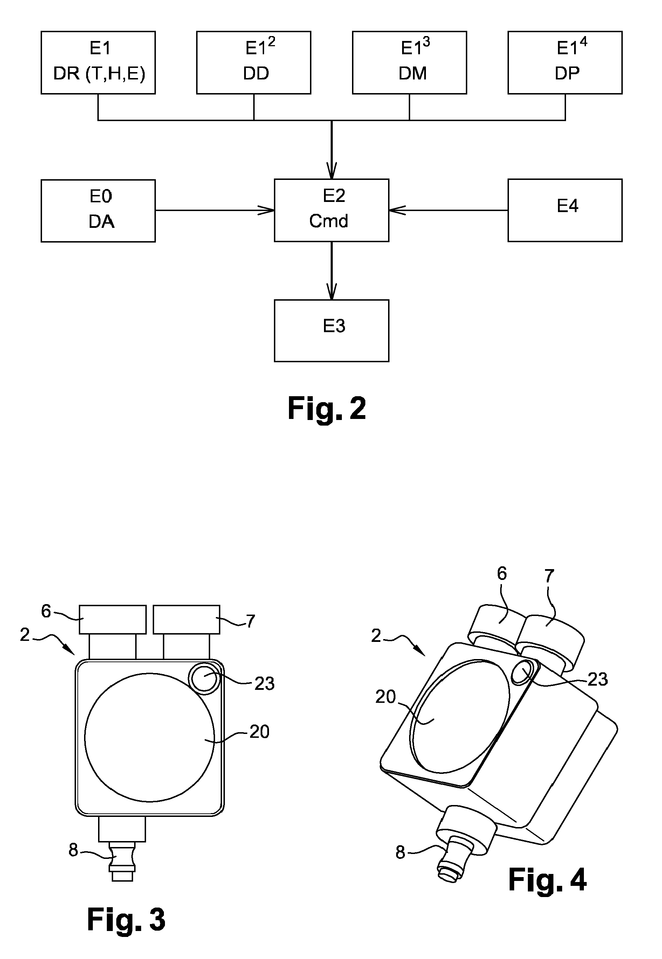

Deux modes de réalisation d'une vanne commandée, en particulier des électrovannes, vont à présent être décrits en référence aux figures 3 à 6.

Selon les différents modes de réalisation, la vanne commandée 2, 2' est agencée pour appliquer une commande d'arrosage Cmd déterminée par l'unité électronique de commande 4 de façon à contrôler la délivrance de liquide d'arrosage, tel que de l'eau ou une solution nutritive.

La vanne commandée 2, 2' est équipée d'un capteur de débit 5 intégré au niveau de la vanne et agencé pour fournir des données de mesure d'un débit de liquide d'arrosage DD dans le conduit d'arrosage 11, qui peut être positionné en amont ou en aval de l'électrovanne. Le positionnement en aval du capteur permet de déterminer simplement le débit traversant la vanne commandée 2, 2'.

La vanne 2, 2' peut comprendre une turbine ou une microturbine 12, en particulier intégrée dans le capteur de débit 5, destinée à l'alimentation électrique de la vanne commandée 2, 2' pour alimenter une électrovanne ou recharger une batterie de l'électrovanne.

La vanne commandée 2, 2' peut notamment être une vanne agencée pour délivrer un débit d'arrosage proportionnel à une valeur de la commande d'arrosage Cmd fournie par l'unité électronique de commande 4.

La vanne commandée 2, 2' peut comprendre un module photovoltaïque 20, 20' destiné à produire l'énergie nécessaire à son fonctionnement et/ou la charge d'une batterie comprise dans la vanne.

Selon une variante non représentée ne comprenant pas de module photovoltaïque, la vanne peut être alimentée par pile, par batterie ou encore par un module photovoltaïque.

La vanne commandée 2, 2' comprend par ailleurs une unité de traitement électronique 22 et une interface de communication à distance 15 destinée à la communication avec l'entité centrale 4.

La vanne comprend en outre un bouton 23, 23' notamment agencé pour réaliser une commande directe de l'électrovanne. Le bouton de commande directe peut notamment fonctionner selon un cycle séquentiel d'ouverture/fermeture. Pour des questions de sécurité, une commande directe d'ouverture ne pourra être maintenue indéfiniment et un retour programmé à un état de fermeture sera mis en oeuvre sans nécessiter une nouvelle manipulation du bouton de commande directe. Selon une variante, ce bouton pourrait être agencé pour initier un appairage entre le capteur et l'électrovanne ou entre le capteur et/ou l'électrovanne et l'unité de commande électronique.

Selon le mode de réalisation de l'installation présenté à la figure 1, la vanne commandée 2 est une vanne à au moins trois voies. Une vanne de ce type est représentée sur les figures 3 et 4. La vanne commandée 2 comprend une première voie 6 destinée à être raccordée à une première source d'alimentation en liquide d'arrosage 9, par exemple constituée par une réserve d'eau de pluie, et une seconde voie 7 destinée à être raccordée à une seconde source d'alimentation en liquide d'arrosage 10, par exemple un réseau de distribution d'eau potable, et une troisième voie 8 étant raccordée à un conduit d'arrosage 11. La vanne commandée est agencée pour raccorder sélectivement la troisième voie 8 raccordée à l'au moins un conduit d'arrosage 11 à la première voie 6 ou à la seconde voie 7 pour mettre en oeuvre la commande Cmd communiquée par l'unité électronique de commande 4. La vanne trois voies interdit une connexion directe entre les deux voies d'entrée de sorte à éviter de réinjecter de l'eau de pluie dans le réseau d'eau potable : soit par des moyens interne au boîtier de l'électrovanne, soit par des moyens externes. En particulier, l'électrovanne pourrait notamment comprendre des butées pour limiter la connexion entre la première voie d'entrée et la sortie ou entre la deuxième voie d'entrée et la sortie et/ou des clapets anti-retour.

Selon un second mode de réalisation représenté sur les figures 5 et 6, une vanne commandée comprend une seule voie d'entrée 6' et une voie de sortie 8'. La vanne commande le passage de l'unique voie d'entrée à la sortie à partir d'une unique alimentation en liquide d'arrosage.

Selon une variante non représentée utilisant une vanne à trois voies, une première voie de la vanne commandée peut être raccordée à une source d'alimentation en liquide d'arrosage, une seconde voie est destinée à être raccordée à premier conduit d'arrosage, et une troisième voie est destinée à être raccordée à un second conduit d'arrosage, la vanne commandée étant agencée pour raccorder sélectivement la source d'alimentation au premier ou au second conduit d'arrosage.

Selon une variante non représentée, le capteur de débit de liquide d'arrosage peut être inséré dans une autre partie de l'installation.

Les vannes commandées peuvent être agencées pour se fermer par défaut en l'absence d'alimentation ou en cas de défaillance ou d'absence de commande communiquée par l'unité électronique. Alternativement ou en complément, il peut être prévu, dans un cas où la commande d'arrosage est définie comme un ordre ou un ensemble d'ordres d'ouverture/fermeture, qu'une trame ou message de commande d'arrosage comprenant au moins un ordre d'action de début d'arrosage comprenne au moins un ordre de fin de l'arrosage.

Selon plusieurs possibilités, les vannes commandées utilisées peuvent être notamment de type électrovanne pilotée, la vanne étant à position instable et telle que l'énergie nécessaire à sa fermeture étant moindre que l'énergie nécessaire à son ouverture. La vanne peut par exemple comprendre un ressort de rappel vers une position fermée et/ou utiliser le débit pour réduire l'énergie nécessaire à sa fermeture.

Une vanne commandée comprend notamment au moins un actionneur comprenant un moteur et un dispositif de réduction de vitesse, dont la sortie entraîne un ou plusieurs clapets, ou noix, d'ouverture/fermeture, ceux-ci pouvant être conduits dans des positions dans lesquelles ils laissent libre ou obturent au moins partiellement le passage du liquide dans la ou les voies de la vanne commandée.

L'unité électronique de commande 4 est agencée pour déterminer une ou plusieurs commandes d'arrosage Cmd et/ou la ou les mettre en oeuvre.

Selon le mode de réalisation représenté sur la figure 1, l'unité électronique de commande 4 est disposée de façon distante par rapport à la vanne commandée 2 et au capteur de mesure 3.

Selon cette configuration, dans laquelle l'unité électronique est distante à la fois de l'au moins un capteur et de la vanne commandée, l'unité électronique de commande 4 peut être formée par une entité centrale de commande d'une installation domotique. L'entité centrale de commande peut comprendre une passerelle de communication vers un réseau de communication externe à l'installation, par exemple Internet. A titre d'exemple, une passerelle de type box domotique (par exemple Tahoma^{®}) peut être utilisée. L'entité centrale de commande peut également comprendre un système d'interface utilisateur 16 en lien avec un terminal de saisie et d'affichage, en communication avec la passerelle.

L'unité électronique de commande 4 comprend une unité de traitement électronique 24 ainsi qu'une interface de communication à distance 13, en particulier une interface de communication sans fil, qui permet de communiquer avec l'unité de traitement électronique 19,22 ainsi que l'interface de communication à distance 14, 15 de la vanne commandée 2 et du capteur de mesure 3. La communication entre la l'unité de traitement électronique 4, la vanne commandée 2 et le capteur 3 peut en particulier une communication de type radiofréquence.

L'unité électronique de commande 4 est agencée pour collecter tout ou partie d'un ensemble de données d'entrée.

Ainsi, l'unité électronique de commande 24 est agencée pour collecter des données de mesure d'au moins une grandeur physique représentative de l'environnement DR fournies par le capteur de mesure 3, en particulier des données d'humidité H, et/ou d'ensoleillement E, et/ou de température T.

L'unité électronique de traitement peut être également agencée pour collecter des données de mesure d'un débit de liquide d'arrosage DD fournies par l'au moins un capteur de débit 5.

L'unité électronique de traitement peut être également agencée pour collecter des données de programmation DP renseignées ou sélectionnées par un utilisateur.

Les données de programmations peuvent notamment correspondre à la sélection d'un programme de fonctionnement de l'installation ou encore à des données d'utilisation ou de commande directe de l'installation par un utilisateur. La sélection d'un programme de fonctionnement peut correspondre à la sélection d'un profil ou scénario de commande pré-établi.

A cet effet, le système d'interface utilisateur 16 est agencé pour collecter des données de programmation DP à renseigner et/ou à sélectionner par un utilisateur. Le système d'interface peut être notamment comprendre un écran et des boutons de commandes, ou un écran tactile, ou une application hébergée sur un terminal mobile, ou un page web accessible par un réseau privé ou public. Le système d'interface est agencé pour communiquer avec l'unité électronique de commande. Ce système d'interface peut être hébergé sur une entité centrale d'une installation domotique formant l'unité électronique de commande.

Le système d'interface peut également interagir ou comprendre le bouton de commande 23, 23' disposé sur la vanne commandée.

Selon une variante non représentée, le système d'interface utilisateur peut également comprendre une télécommande spécifique prévue pour commander directement l'électrovanne et/ou le capteur.

L'unité électronique de commande peut être agencée pour collecter des données météorologiques DM. Cette collecte peut notamment être réalisée par un accès en réseau à un service de diffusion de données météorologiques.

L'unité électronique de commande peut en outre être agencée pour accéder à un référentiel de données 25 relatives notamment à des types de végétaux à arroser comprenant des données sur le type d'arrosage à appliquer auxdits végétaux afin de collecter des données de référence sur les végétaux DV. Ce référentiel 25 peut être distant, et accessible par un réseau. L'installation, et notamment l'unité électronique de commande, peut alternativement comprendre une mémoire de stockage d'un tel référentiel de données.

Le référentiel de données 25 peut également comprendre des données relatives à des types de sols ou de terrain à arroser comprenant des données sur le type d'arrosage à appliquer préférentiellement auxdits sols, par exemple en fonction de leur composition ou de leur profil.

L'unité de traitement peut être agencée pour présenter un mode de fonctionnement d'apprentissage permettant de collecter des données d'apprentissage DA relatives à l'utilisation de l'installation.

L'unité de traitement 24 est agencée pour déterminer la commande d'arrosage Cmd en fonction de tout ou partie des données suivantes qui correspondent à des paramètres de la commande d'arrosage :
- des données de mesure d'au moins une grandeur physique représentative de l'environnement DR fournies par le capteur de mesure 3.
- des données de mesure d'un débit de liquide d'arrosage DD
- des données de programmation DP.
- données météorologiques DM.
- des données de référence sur les végétaux DV
- de données d'apprentissage DA.

Sur la base des données de mesure des différents capteurs, des données météorologiques, des programmations de l'utilisateur et/ou des données d'apprentissage, l'unité électronique peut déterminer une commande d'arrosage Cmd, en utilisant par exemple au moins un profil de commande Pr prédéfini paramétrable en fonction des données collectées. Cette détermination sera décrite ultérieurement.

L'unité électronique de commande 4 peut être agencée pour comparer les données de mesure d'un débit de liquide d'arrosage DD fournies par l'au moins un capteur de débit 5 à la commande d'arrosage Cmd, notamment pour mettre en oeuvre un asservissement et une régulation de la commande d'arrosage Cmd.

Selon une variante non représentée, l'unité électronique peut être disposée de façon solidaire avec l'au moins un capteur, par exemple dans un boîtier commun.

Selon une autre variante non représentée, l'unité électronique est disposée de façon solidaire avec la vanne commandée, par exemple dans un boîtier commun.

Selon un autre variante non représentée, l'installation comprend une première unité électronique de commande et une seconde unité électronique de commande, la première unité électronique de commande et la seconde unité électronique de commande étant agencées pour communiquer de façon à permettre que l'une des deux unités électronique de commande soit identifiée comme une unité maître et définisse la commande d'arrosage.

Lors de la mise en oeuvre de la commande d'arrosage par la vanne commandée 2, 2', l'unité électronique de traitement 15 de la vanne contrôle le fonctionnement du moteur et par conséquent le degré d'ouverture du ou des clapets obturant les voies de la vanne. Par le contrôle de la position angulaire en sortie du moteur, on contrôle ainsi la section de circulation de liquide d'arrosage et donc le débit d'arrosage (pour une pression donnée). Ce débit peut être vérifié par la lecture de la mesure fournie par le capteur de débit de liquide d'arrosage.

Le procédé de commande d'une installation d'arrosage 1 sera à présent décrit en référence à la figure 2.

Le procédé de commande peut comprendre une étape initiale d'apprentissage E0 au cours de laquelle une corrélation des données de programmation DP et des données de mesure d'au moins une grandeur physique représentative de l'environnement DR est réalisée de façon à déterminer des données d'apprentissage DA.

Par exemple, une étape d'apprentissage pendant une période d'utilisation, notamment une durée d'utilisation initiale, par exemple de quelques jours, peut être réalisée en corrélant les données de programmation qui reflètent les habitudes de l'utilisateur client et les données de mesure d'au moins une grandeur physique représentative de l'environnement, comme notamment l'humidité du sol, la température ou l'ensoleillement. En particulier, la vitesse d'absorption du liquide d'arrosage par la terre peut être apprise (grâce à une corrélation entre les données d'arrosage ou de pluie et les données fournies par le capteur d'humidité dans le sol). Cette information de vitesse peut être utilisée pour définir un débit maximum d'arrosage.

Les données d'apprentissage DA pourront être utilisées ultérieurement pour déterminer une commande d'arrosage Cmd.

Suite à l'étape initiale d'apprentissage E0 si celle est réalisée, une ou plusieurs étapes de collecte de données décrites précédemment peuvent être réalisées, et notamment :
- E1 : Une étape de collecte de données de mesure d'au moins une grandeur physique représentative de l'environnement DR;
- E1² une étape de collecte de données de mesure d'un débit de liquide d'arrosage DD obtenues par une mesure dans le conduit d'arrosage 19,
- E1³ une étape de collecte de données météorologiques DM,
- E1⁴ une étape de collecte de données de programmation DP renseignées ou sélectionnées par un utilisateur.

Il est à noter que des données de référence sur les végétaux DV peuvent être également collectées comme nous l'avons vu précédemment.

Sur la base des données collectées, une étape E2 de détermination d'une commande d'arrosage Cmd est réalisée.

La détermination de la commande d'arrosage E2 peut comprend une utilisation d'au moins un profil ou scénario de commande Pr prédéfini, en particulier paramétrable, prévoyant une ou plusieurs phases distinctes. En particulier, le profil de commande Pr peut correspondre à un profil adapté à un type de végétal à arroser, ou encore à un profil d'évolution temporel de la commande d'arrosage. Ces dispositions permettent d'optimiser un scenario d'arrosage de façon à minimiser la consommation en eau tout en optimisant le taux d'humidité du terrain sur du long terme.

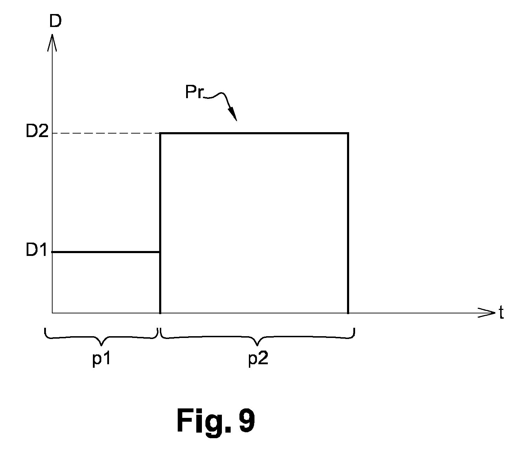

Selon un premier exemple représenté sur la figure 9, un profil de commande Pr comprend au moins une première phase d'arrosage à une première valeur de débit D1 pendant une première période d'arrosage p1, puis une seconde phase d'arrosage à une seconde valeur de débit D2 supérieure à D1 pendant une seconde période d'arrosage p2. Ainsi, il est possible de préparer/humidifier le sol pendant la première phase avec un faible débit afin d'éviter le ruissellement du liquide d'arrosage, puis de procéder à un arrosage avec un second débit plus important lors de la seconde phase. La fin de la seconde phase peut être déterminée par la constatation d'un niveau d'humidité satisfaisant sur la base des données fournies par le capteur d'humidité 3a ou par l'échéance d'une temporisation.

Selon un autre exemple, le profil de commande Pr peut être défini en déterminant le débit de liquide d'arrosage en fonction de la variation d'humidité constatée au niveau de la sonde sur une période de temps. La période de temps peut être définie préalablement à une période d'arrosage, et/ou lors d'une période d'arrosage, ou encore consécutivement à une période d'arrosage.

Selon un autre exemple, le profil de commande Pr sur quelques jours peut être défini en suivant des cycles "terre humide - terre sèche", ces cycles étant éventuellement nécessaires au bon développement des racines de certains végétaux.

Selon un autre exemple, le profil de commande Pr peut intégrer un rationnement de l'arrosage. Ce rationnement peut être basé sur une information relative à une période de sècheresse, fournie à l'unité électronique de commande ou définie à partir de l'information de diminution du niveau d'eau d'une cuve de récupération d'eau de pluie. Le niveau d'eau dans la cuve de récupération d'eau de pluie peut être estimé notamment à partir d'une variation de débit mesuré par le capteur de débit de la vanne commandée.

Selon un autre exemple, le profil de commande Pr peut permettre de gérer deux (voire trois) zones différentes avec des arrosages à projection d'eau à partir d'un gicleur connecté en embout du conduit d'arrosage. Dans ce cas, le profil de commande intègre des variations de débit d'eau: avec un faible débit, il est possible d'arroser à proximité du gicleur, avec un fort débit, l'arrosage est réalisé quelques mètres plus loin dans une deuxième zone. Le profil de commande peut définir un déclenchement de l'arrosage de façon préférentielle dans les premières heures, notamment les trois premières heures ou les deux premières heures, après le lever du soleil et/ou les dernières heures notamment les trois dernières heures ou les deux dernières heures précédant le coucher du soleil.

La détection du jour et de la nuit peut être réalisée notamment par le capteur d'ensoleillement. L'unité électronique de commande peut comprendre également une horloge pour permettre une programmation horaire qui peut également réaliser cette détection.

Le profil de commande ou scénario peut correspondre à la définition d'une contrainte de débit ou de volume d'arrosage en fonction du temps. La commande peut être réalisée sur un critère de temps et/ou de débit et/ou de volume.

Le procédé de commande peut comprendre une étape de vérification d'au moins un critère de sécurité sur le volume ou le temps d'arrosage en prévoyant un seuil d'arrêt au-delà d'une durée d'arrosage ou d'un volume d'arrosage maximal.

Enfin, une étape d'arrosage E3 est réalisée au cours de laquelle une délivrance d'un liquide d'arrosage est réalisée en correspondance à la commande d'arrosage Cmd.

Le procédé de commande peut également comprendre une étape de comparaison des données de mesure d'un débit de liquide d'arrosage obtenues par une mesure à la commande d'arrosage, notamment pour vérifier la correspondance entre le débit de liquide d'arrosage délivré et la commande d'arrosage attendue.

Cette comparaison permet de réaliser un asservissement en fonction d'un débit souhaité par une boucle de régulation qui permet d'obtenir une commande plus précise de l'arrosage. Cette comparaison permet également ou alternativement de réaliser un diagnostic automatique de la vanne commandée. Ainsi, l'unité électronique peut déterminer la présence d'une fuite si une valeur significative de débit est détectée alors que la commande de la vanne commandée correspond à un état de fermeture.

Le procédé peut également comprendre une étape de sélection d'une source d'alimentation en liquide d'arrosage parmi une pluralité de sources d'alimentations en liquide d'arrosage 9, 10, la quantité de liquide d'arrosage délivrée lors de l'étape d'arrosage E3 étant prélevé de la source d'alimentation sélectionnée.

Ainsi, il est possible de déclencher une commutation de la vanne commandée en fonction d'une valeur représentative de débit faible communiquée par le capteur de débit de liquide d'arrosage 5 vers une autre source d'alimentation, dans le cas où la vanne commandée est une vanne à trois voies. Ainsi, à titre d'exemple, dans le mode de réalisation d'une installation telle que décrit à la figure 1, il est possible de commuter préférentiellement la vanne commandée sur une réserve d'eau pluviale, puis de commuter la vanne sur le réseau d'alimentation en eau potable lorsqu'un débit trop faible est détecté par le capteur de débit 5. Il est également possible de réaliser une vérification périodique du remplissage de la réserve d'eau 9.

Comme il va de soi, l'invention ne se limite pas à la seule forme d'exécution de ce dispositif et ce système de commande et/ou de contrôle, décrits ci-dessus à titre d'exemple, elle en embrasse au contraire toutes les variantes de réalisation.

Dans la présente demande, le terme arrosage recouvre l'arrosage de sols et de végétaux, mais également la gestion de la délivrance d'eau dans le cadre d'applications domotiques, à l'intérieur ou à l'extérieur d'un bâtiment, notamment pour la gestion d'alimentation d'un ou de plusieurs jet d'eaux, le remplissage d'un ou plusieurs bassins d'eau, la gestion d'un ou de plusieurs brumisateurs, notamment de brumisateurs de terrasse.

## Revendications

1. Installation d'arrosage (1) comprenant :
- Une vanne commandée (2) agencée pour contrôler la délivrance d'un liquide d'arrosage tel que de l'eau ou une solution nutritive par au moins un conduit d'arrosage (11) ;
- Au moins un capteur de mesure (3, 3a, 3b, 3c) agencé pour fournir des données de mesure d'au moins une grandeur physique représentative de l'environnement (DR) ;
- Une unité électronique de commande (4) agencée pour déterminer une commande d'arrosage (Cmd) en fonction des données de mesure d'au moins une grandeur physique représentative de l'environnement (DR) fournies par l'au moins un capteur de mesure (3),
la vanne commandée (2) étant agencée pour appliquer la commande d'arrosage (Cmd) déterminée par l'unité électronique de commande (4) de façon à contrôler la délivrance du liquide d'arrosage,
la vanne commandée (2) étant agencée pour délivrer un débit d'arrosage proportionnel à une valeur de la commande d'arrosage (Cmd) fournie par l'unité électronique de commande (4).

2. Installation d'arrosage (1) selon la revendication 1, dans laquelle la détermination de la commande d'arrosage comprend une utilisation d'au moins un profil de commande (Pr) comprenant plusieurs phases distinctes.

3. Installation d'arrosage (1) selon l'une des revendications précédentes, dans laquelle la vanne commandée (2) est une vanne à au moins trois voies.

4. Installation d'arrosage (1) selon la revendication 3, dans laquelle la vanne commandée (2) comprend une première voie (6) destinée à être raccordée à une première source d'alimentation en liquide d'arrosage (9), une seconde voie (7) destinée à être raccordée à une seconde source d'alimentation en liquide d'arrosage (10) et une troisième voie (8) étant raccordée à l'au moins un conduit d'arrosage (11) la vanne commandée étant agencée pour raccorder sélectivement la troisième voie (8) raccordée à l'au moins un conduit d'arrosage (11) à la première voie (6) ou à la seconde voie (7).

5. Installation d'arrosage (1) selon l'une des revendications précédentes, comprenant au moins un capteur de débit (5) agencé pour fournir des données de mesure d'un débit de liquide d'arrosage (DD) dans l'au moins un conduit d'arrosage (11).

6. Installation d'arrosage (1) selon la revendication 5, dans laquelle l'unité électronique de commande (4) est agencée pour comparer les données de mesure d'un débit de liquide d'arrosage (DD) fournies par l'au moins un capteur de débit (5) à la commande d'arrosage (Cmd) déterminée en fonction des données de mesure d'au moins une grandeur physique représentative de l'environnement (DR).

7. Installation d'arrosage (1) selon l'une des revendications précédentes, dans laquelle l'unité électronique de commande (4) est disposée de façon distante par rapport à la vanne commandée (2) et/ou l'au moins un capteur de mesure (3), l'unité électronique de commande (4) ainsi que la vanne commandée (2) et/ou l'au moins un capteur de mesure (3) comprenant une interface de communication à distance (13, 14, 15), notamment une interface de communication sans fil.

8. Procédé de commande d'une installation d'arrosage (1) comprenant :
- (E1) Une étape de collecte de données de mesure d'au moins une grandeur physique représentative de l'environnement (DR);
- (E2) Une étape de détermination d'une commande d'arrosage (Cmd) en fonction des données de mesure d'au moins une grandeur physique représentative de l'environnement (DR), l'étape de détermination d'une commande d'arrosage (E2) comprenant une utilisation d'au moins un profil de commande d'arrosage (Pr), ledit profil de commande d'arrosage (Pr) comprenant au moins une première phase d'arrosage à une première valeur de débit pendant une première période d'arrosage (p1), puis une seconde phase d'arrosage à une seconde valeur de débit pendant une seconde période d'arrosage (p2), la seconde valeur de débit étant supérieure à la première valeur de débit ;
- (E3) Une étape d'arrosage au cours de laquelle la délivrance d'un liquide d'arrosage, tel que de l'eau ou une solution nutritive, est réalisée en correspondance avec la commande d'arrosage (Cmd).

9. Procédé de commande d'une installation d'arrosage (1) selon la revendication 8, comprenant en outre :
- (E1²) une étape de collecte de données de mesure d'un débit de liquide d'arrosage (DD) obtenues par une mesure dans au moins un conduit d'arrosage (19),
l'étape de détermination d'une commande d'arrosage (E2) comprenant une détermination d'une commande d'arrosage (Cmd) réalisée en outre en fonction des données de mesure d'un débit (DD).

10. Procédé de commande d'une installation d'arrosage (1) selon l'une des revendications 8 ou 9, comprenant en outre :
- Une étape de sélection d'une source d'alimentation en liquide d'arrosage parmi une pluralité de sources d'alimentations en liquide d'arrosage (9,10) ;
la quantité de liquide d'arrosage délivrée lors de l'étape d'arrosage (E3) étant prélevé de la source d'alimentation sélectionnée.

11. Procédé de commande d'une installation d'arrosage (1) selon l'une des revendications 8 à 10, comprenant en outre :
- (E1³) une étape de collecte de données météorologiques (DM), l'étape de détermination d'une commande d'arrosage (E2) comprenant une détermination d'une commande d'arrosage (Cmd) réalisée en outre en fonction des données météorologiques (DM).

12. Procédé de commande d'une installation d'arrosage (1) selon l'une des revendications 8 à 11 comprenant en outre :
- (E1⁴) une étape de collecte de données de programmation (DP) renseignées ou sélectionnées par un utilisateur,
l'étape de détermination d'une commande d'arrosage (E2) comprenant une détermination d'une commande d'arrosage (Cmd) réalisée en outre en fonction des données de programmation (DP).

13. Procédé de commande d'une installation d'arrosage (1) selon la revendication 12, comprenant une étape d'apprentissage (E0) au cours de laquelle une corrélation des données de programmation (DP) et des données de mesure d'au moins une grandeur physique représentative de l'environnement (DR) est réalisée de façon à déterminer des données d'apprentissage (DA),
l'étape de détermination d'une commande d'arrosage (E2) comprenant une détermination d'une commande d'arrosage (Cmd) réalisée en outre en fonction des données d'apprentissage (DA).
